# FASCICULE DE BREVET EUROPEEN

(11) **EP 1 655 157 B1**
(45) Date de publication et mention de la délivrance du brevet: **21.03.2007**
(21) Numéro de dépôt: 04292597.4
(22) Date de dépôt: 03.11.2004
(51) Int. Cl.: B60G 15/12, B60G 17/08, F16F 9/08, F16F 9/53

(54) **Sphère de suspension**
Aufhängungskugel
Suspension sphere

(43) Date de publication de la demande: 10.05.2006
(73) Titulaire: Delphi Technologies, Inc., Troy, MI 48007 (US)
(72) Inventeur: Prevot, Benoit, 78400 Chatou (FR); Raynauld, Olivier, 60300 Senlis (FR); Cantuern, Lilian, 60300 Senlis (FR)
(74) Mandataire: Abello, Michel

(56) Documents cités:
- EP-A- 0 335 016
- DE-A1- 10 024 572
- DE-A1- 19 961 716
- US-A- 3 788 627
- US-A- 4 092 017
- US-A- 4 858 733
- US-A1- 2002 185 347

## Description

La présente invention a pour objet une sphère de suspension oléopneumatique.

Une sphère de suspension peut être utilisée dans tout système nécessitant un amortissement et/ou un ressort. Par exemple, certains véhicules automobiles comportent une suspension oléopneumatique. Ces véhicules présentent des roues munies chacune d'un dispositif de suspension. Chaque dispositif comporte une sphère de suspension et un cylindre relié à la sphère de suspension, dans lequel se déplace un piston muni d'une tige de piston. Par rapport au piston, la tige de piston se trouve du côté opposé à la sphère de suspension. L'extrémité de la tige de piston, non reliée au piston, est reliée à un bras de suspension portant la roue correspondante.

On connaît par le document FR2751037 une sphère de suspension, dans laquelle le volume intérieur de la sphère de suspension est partagé par une membrane en deux compartiments. Le premier compartiment, se trouvant du côté du cylindre, est rempli d'huile sous pression, et le second compartiment est rempli d'un gaz inerte (généralement de l'azote) sous pression. Un système de clapetterie est placé au niveau de l'entrée de la sphère de suspension et crée une résistance s'opposant à un flux d'huile entrant ou sortant de la sphère de suspension. Ce clapet joue le rôle d'un amortisseur, tandis que le volume de gaz dans la sphère de suspension joue le rôle de ressort.

Cependant, le clapet de laminage a souvent une durée de vie inférieure à la durée de vie de la sphère de suspension proprement dite et de la membrane. Des procédés permettant de remplacer le système de clapetterie d'une telle sphère de suspension sont connus, notamment par le document FR2751037, mais les méthodes utilisées sont compliquées et coûteuses.

En outre, de telles sphères de suspension ne permettent pas d'avoir différents réglages de l'amortissement. Pour compenser cet inconvénient, des sphères de suspension supplémentaires peuvent être disposées dans le dispositif de suspension, par exemple au centre de chaque essieu du véhicule, ces sphères étant mises en service ou non en fonction de la force de l'amortissement souhaité. Cependant, un tel dispositif nécessite l'utilisation de sphères de suspension supplémentaires et de vannes de commutation pour mettre en service sélectivement ces sphères de suspension supplémentaires. Il en résulte un coût d'équipement accru ainsi qu'un encombrement supplémentaire, alors que l'espace disponible dans un véhicule peut être très réduit.

EP 0335016 décrit une sphère de suspension conforme au préambule de la revendication 1.

La présente invention a pour but de proposer une nouvelle sphère de suspension qui évite au moins certains des inconvénients précités et qui permette d'adapter l'amortissement en fonction des besoins.

A cet effet, l'invention a pour objet une sphère de suspension selon la revendication 1.

Les dispositifs utilisant un fluide magnéto-rhéologique présentent l'avantage de ne nécessiter aucun clapet mobile pour contrôler le débit. Au lieu de cela le dispositif contient une bobine pouvant être alimentée en courant électrique par des conducteurs électriques, afin d'engendrer un champ magnétique dans le ou les passages entre les chambres de fluide magnéto-rhéologique. Un tel champ magnétique peut-être facilement réglé pour contrôler la force d'amortissement procurée par la sphère de suspension.

L'enveloppe peut être composée d'une ou de plusieurs pièces. Le cas échéant, les différentes pièces de l'enveloppe peuvent être assemblées par tout mode d'assemblage.

Selon l'invention, ladite enveloppe comporte au moins deux parties assemblées l'une à l'autre, une rainure annulaire étant prévue entre un bord d'une première desdites parties et un bord correspondant d'une deuxième desdites parties, ladite membrane étant fixée par serrage dans ladite rainure.

Avantageusement, ladite enveloppe comporte une quatrième chambre, la quatrième chambre contenant une huile propre, la quatrième chambre étant séparée de manière étanche de la troisième chambre par une deuxième membrane déformable, la quatrième chambre communiquant avec l'espace intérieur dudit corps de cylindre à travers ladite ouverture.

Une telle réalisation permet de confiner le fluide magnéto-rhéologique entre deux membranes déformables fixées dans la sphère, de sorte qu'aucune pièce d'étanchéité mobile (étanchéité dynamique) n'est en contact avec le fluide magnéto-rhéologique.

Selon une autre caractéristique de l'invention, ladite enveloppe est constituée de trois parties assemblées, une rainure annulaire étant prévue entre un bord d'une première partie d'extrémité de l'enveloppe et un bord correspondant d'une partie centrale de l'enveloppe, une deuxième rainure annulaire étant prévue entre un bord opposé de ladite partie centrale et un bord correspondant d'une deuxième partie d'extrémité de l'enveloppe, lesdites première et deuxième membranes étant fixées respectivement par serrage dans lesdites première et deuxième rainures.

Avantageusement, ladite paroi de séparation est rigide, ledit au moins un passage étant percé dans ladite paroi de séparation.

De préférence, ladite paroi de séparation rigide porte ladite au moins une bobine.

Selon une autre caractéristique de l'invention, le sens d'enroulement de ladite au moins une bobine est tel que ledit champ magnétique traverse transversalement au moins une portion dudit au moins un passage.

Avantageusement, ladite au moins une bobine est reliée à une unité de commande, apte à produire un courant contrôlé à travers ladite au moins une bobine.

De préférence, ladite paroi de séparation est réalisée dans un matériau ferromagnétique.

Selon un mode de réalisation de l'invention, lesdites deuxième et troisième chambres sont aptes à communiquer par plusieurs passages.

Avantageusement, ladite au moins une bobine entoure l'ensemble desdits plusieurs passages.

Au sens de la présente invention, on utilise le terme sphère de suspension pour désigner les dispositifs de suspension dont la structure est revendiquée car il s'agit du terme technique généralement utilisé dans le domaine considéré. Toutefois, ce terme générique n'implique nullement que l'enveloppe soit nécessairement sphérique. L'enveloppe de la sphère de suspension peut être de forme quelconque.

L'invention sera mieux comprise, et d'autre buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue simplifiée en coupe de la sphère de suspension selon un mode de réalisation de l'invention ;
- la figure 2 est une vue schématique fonctionnelle d'un dispositif de suspension de véhicule incluant la sphère de suspension de la figure 1;
- la figure 3 est une vue analogue à la figure 1 montrant la sphère de suspension pour une autre position du piston ;
- la figure 4 est une vue simplifiée et en coupe de la sphère de suspension selon un deuxième mode de réalisation de l'invention ; et
- la figure 5 est une vue agrandie de la zone V de la figure 4 représentant partiellement la membrane de séparation.

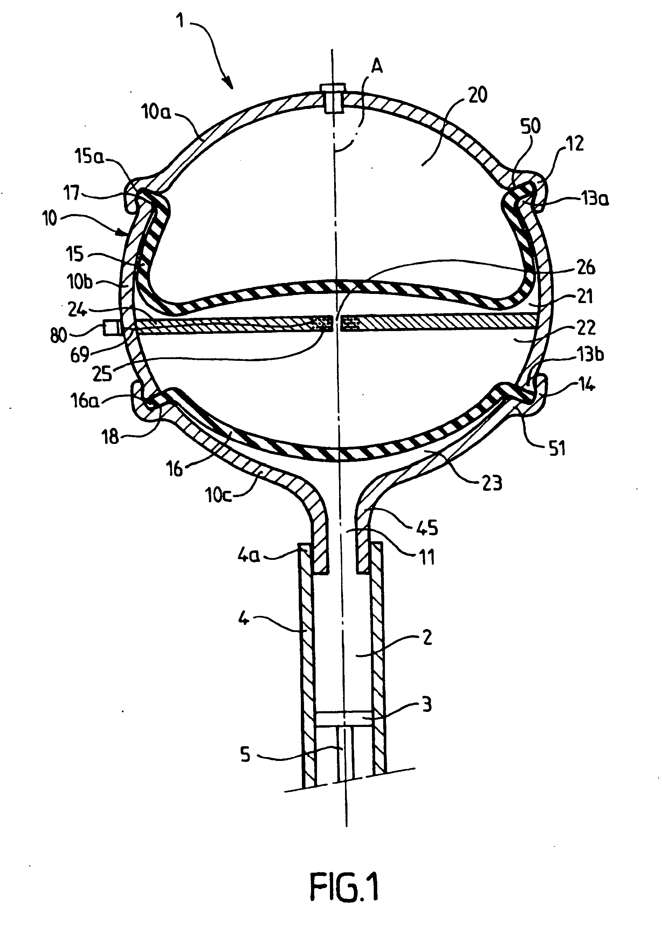

En se référant à la figure 1, on voit une sphère de suspension 1, utilisable dans un dispositif de suspension hydraulique en association avec un cylindre muni d'un piston. Dans un corps de cylindre 4, un piston 3 mobile de manière coulissante ferme de manière hermétique une chambre 2 dans laquelle se trouve un liquide sous pression, généralement de l'huile. Cette chambre 2 est en communication à travers l'extrémité 4a du corps de cylindre 4 avec une sphère de suspension 1. Une tige de piston 5 est fixée au piston 3 du côté opposé à la chambre 2. L'extrémité de la tige 5, non reliée au piston 3, est reliée à un organe dont les déplacements doivent être amortis, par exemple à un bras de suspension (non montré) portant une roue (non montrée) dont les déplacements verticaux par rapport à la caisse du véhicule doivent être amortis.

La sphère de suspension 1 comporte une enveloppe extérieure 10 métallique apte à résister aux hautes pressions pouvant régner dans la sphère de suspension 1. Cette enveloppe 10 a une forme sensiblement sphérique. L'enveloppe 10 pourrait également avoir une forme quelconque. L'enveloppe 10 est apte à faire communiquer de manière étanche l'intérieur de la sphère de suspension 1 avec l'intérieur du corps de cylindre 4, directement ou indirectement, d'une manière qui sera décrite en détail plus loin.

L'enveloppe 10 est constituée de trois parties 10a, 10b et 10c, assemblées par sertissage ou autre mode d'assemblage. Lorsque la sphère de suspension 1 est disposée verticalement telle que représentée sur la figure 1, la partie 10a forme le haut de l'enveloppe 10, la partie 10b forme la partie centrale de l'enveloppe 10 et la partie 10c forme la partie inférieure de l'enveloppe 10. Par convention, on désigne ainsi les différentes parties de l'enveloppe 10, bien que la sphère de suspension 1 puisse être en pratique orientée dans toute autre position.

La partie supérieure 10a présente la forme d'une calotte sphérique dont le bord périphérique 50 porte une excroissance 12 de sertissage sous la forme d'un rebord continu ou d'une pluralité de pattes espacées à la périphérie de la partie 10a. L'excroissance 12 fait saillie radialement et permet de sertir la partie 10a à la partie 10b en recouvrant le bord supérieur 13a de la partie 10b. La partie centrale 10b présente la forme globale d'une sphère creuse tronquée symétriquement au niveau de deux bords circulaires parallèles 13a et 13b. La partie inférieure 10c présente la forme d'une calotte sphérique dont le bord périphérique 51 porte une excroissance 14 de sertissage sous la forme d'un rebord continu ou d'une pluralité de pattes espacées à la périphérie de la partie 10c. L'excroissance 14 fait saillie radialement et permet de sertir la partie 10c à la partie 10b en recouvrant le bord inférieur 13b de la partie 10b. Les bords 13a et 13b présentent respectivement un épaississement saillant vers l'extérieur de l'enveloppe 10, pour coopérer avec les excroissances de sertissage 12 et 14.

La partie centrale 10b contient une paroi de séparation 24 en forme de disque dont le bord périphérique est fixé de manière étanche à la surface intérieure de la partie 10b, par exemple par soudure, de manière à diviser en deux l'espace intérieur de la partie 10b.

La partie 10c comporte sur le sommet de sa calotte un goulot 45. Le goulot 45 comporte un filetage et l'extrémité 4a du corps de cylindre 4 comporte un taraudage, le filetage et le taraudage étant adaptés, de telle manière que le goulot 45 soit apte à être monté par vissage sur la partie 4a. Un joint d'étanchéité n'est pas représenté. Le goulot 45 comporte une ouverture 11. L'ouverture 11 débouche dans la chambre 2 et permet la communication entre l'intérieur de la sphère de suspension 1 et la chambre 2.

A l'intérieur de l'enveloppe 10 se trouvent deux membranes 15 et 16. Les membranes 15 et 16 sont réalisées dans un matériau souple déformable, tel que du caoutchouc ou une matière synthétique.

La membrane 15 est fixée à l'enveloppe 10 en logeant le bord périphérique 15a de la membrane 15 dans une rainure annulaire 17 prévue entre le bord supérieur 13a de la partie 10b et le bord périphérique 50 de la partie 10a. Le bord 15a est fixé par serrage dans cette rainure 17.

La membrane 16 est fixée à l'enveloppe 10 en logeant le bord périphérique 16a de la membrane 16 dans une rainure annulaire 18 prévue entre le bord inférieur 13b de la partie 10b et le bord périphérique 51 de la partie 10c. Le bord 16a est fixé par serrage dans cette rainure 18.

Ainsi, l'espace intérieur de l'enveloppe 10 comporte quatre chambres 20, 21, 22 et 23. La chambre supérieure 20, située entre la partie 10a et la membrane 15, est remplie d'un gaz sous pression, par exemple de l'air ou de l'azote. Elle est séparée de la chambre 21 de manière étanche par la membrane 15. La chambre 21, délimitée entre la membrane 15 et la paroi 24, contient un fluide magnéto-rhéologique. La chambre 21 est séparée de la chambre 22 par la paroi de séparation 24. La chambre 22, délimitée entre la paroi 24 et la membrane 16, contient ce même fluide magnéto-rhéologique et communique avec la chambre 21 par un passage 26 ménagé à travers la paroi 24. Il pourrait aussi y avoir plusieurs passages entre les deux chambres 21 et 22.

La chambre 22 est séparée de la chambre 23 de manière étanche par la membrane 16. La chambre inférieure 23, située entre la partie 10c et la membrane 16 est en communication avec la chambre du cylindre 2 par l'ouverture 11 et contient, en fonctionnement, le même liquide sous pression que la chambre 2.

Le fluide magnéto-rhéologique est une huile synthétique contenant une charge de particules ferromagnétiques. Par exemple, un fluide magnéto-rhéologique est constitué d'une huile synthétique contenant une charge d'environ 10 à 25% en volume de particules de fer. Par exemple, la taille des particules de fer est comprise entre 3 et 10 µm. La forme des particules peut être sphérique ou autre, par exemple en forme de patate, ellipsoïdale, de bâtonnet, de polyèdres, etc. Par exemple, la viscosité du fluide magnéto-rhéologique est comprise entre environ 20 et environ 65 centipoises à 40°C.

Du fait de la présence des particules de fer en suspension dans l'huile, celle-ci est extrêmement abrasive, même si l'on choisit des particules de fer ayant une forme approximativement sphérique. Il en résulte que les divers éléments en contact avec le fluide magnéto-rhéologique doivent être conçus pour être résistants à l'abrasion. Il est connu que c'est une contrainte particulièrement difficile pour la conception d'une étanchéité dynamique.

La chambre 23, qui est en communication avec la chambre du cylindre, est donc remplie d'une huile propre, sans charge de particules de fer ou autres particules abrasives, c'est-à-dire une huile différente du fluide magnéto-rhéologique contenu dans la chambre centrale 22.

La paroi 24 porte une bobine 25. La bobine 25 est apte à créer un champ magnétique lorsqu'elle est alimentée en courant, d'une manière qui sera décrite en détail plus loin. Le passage 26, relativement étroit, permet la circulation du fluide magnéto-rhéologique entre les chambres 21 et 22. Le diamètre du passage 26 dépend de la force d'amortissement nécessaire.

La bobine 25 est un enroulement de fil conducteur et est disposée de manière à entourer le passage 26. L'axe d'enroulement de la bobine est perpendiculaire au plan de la paroi 24. Le champ magnétique créé par une bobine est connu et ne sera pas décrit ici. Quand la bobine 25 n'est pas alimentée en courant, le fluide magnéto-rhéologique peut circuler dans le passage 26 du dispositif moyennant un certain frottement visqueux. Quand la bobine 25 est alimentée en courant, les particules de fer contenues dans le fluide magnéto-rhéologique s'orientent collectivement dans le passage 26, en fonction du flux magnétique engendré par la bobine, créant ainsi des barrières qui s'opposent ou tout au moins freinent encore plus fortement la circulation de l'huile entre deux chambres 21 et 22.

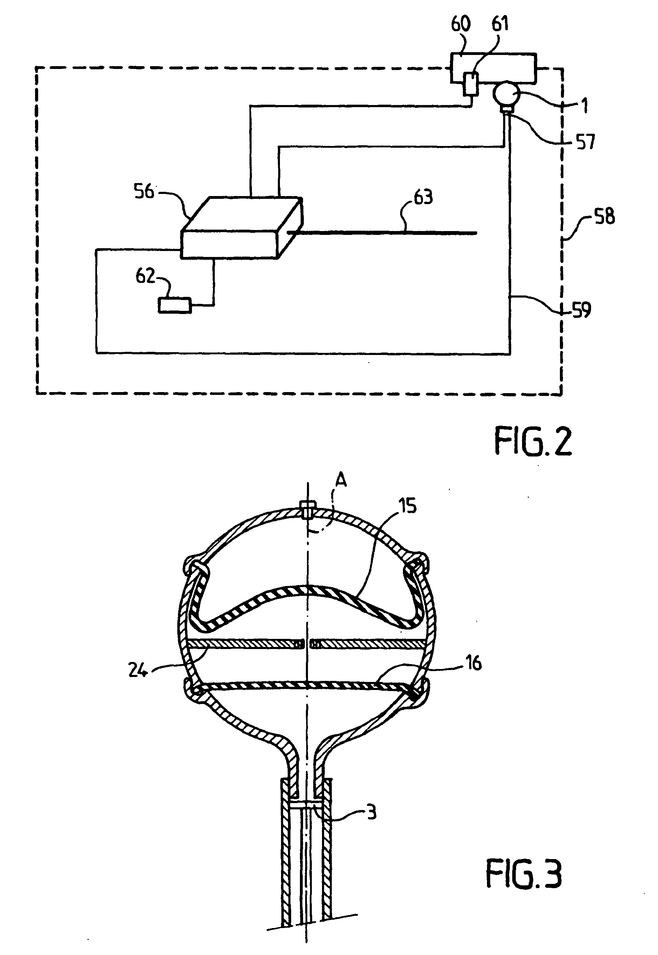

En se référant à la figure 2, on a représenté très schématiquement un véhicule 58 muni d'un dispositif de suspension incluant la sphère de suspension 1 pour amortir les débattements d'une roue 60. Une unité de commande embarquée 56 comporte une entrée reliée à un capteur de température 57, permettant de déterminer la température de la sphère de suspension 1. Le capteur 57 permet en particulier de détecter une surchauffe du dispositif de suspension. Les membranes 15 et 16 ne peuvent pas supporter des températures trop élevées. En cas de surchauffe de la sphère de suspension 1 détectée par le capteur 57, on peut mettre celle-ci hors de fonction (interruption du courant) pour éviter son endommagement. Un capteur de déplacement 61, relié à une deuxième entrée de l'unité de commande 56, permet de déterminer le déplacement de la roue 60 par rapport à la caisse du véhicule 58. Un capteur de vitesse 62, relié à une troisième entrée de l'unité de commande 56, permet de déterminer la vitesse de roulis de la caisse du véhicule 58. Un bus 63, relié à une quatrième entrée de l'unité de commande 56, fournit à l'unité de commande 56 des paramètres tels que la vitesse du véhicule 58, l'angle volant, la vitesse de lacet et l'accélération latérale. A partir de ces signaux d'entrées, l'unité de commande 56 détermine à tout instant la force d'amortissement nécessaire pour la roue 60. En fonction de cela, elle détermine l'intensité du courant destiné à alimenter la bobine 25 afin de produire le champ magnétique nécessaire. L'unité de commande 56 comporte une sortie qui est reliée à la bobine 25, par des câbles d'alimentation 59 reliés à un connecteur 80 agencé sur l'enveloppe 10. Entre le connecteur 80 et la bobine 25 se trouve un câblage interne 69 qui est par exemple situé dans la paroi de séparation 24.

Bien que la figure 2 ne mentionne qu'une seule roue pour des raisons de clarté, l'unité de commande 56 peut bien sûr être reliée à des dispositifs de suspension similaires pour les autres roues du véhicule. L'unité de commande 56 peut comporter un mode de fonctionnement de défaillance. En cas de défaillance ou de mise hors de fonction d'une ou de plusieurs des sphères de suspension 1, le mode de défaillance permet d'adapter le calcul de l'amortissement nécessaire en utilisant uniquement les sphères de suspension 1 en fonctionnement.

La bobine 25, lorsqu'elle est alimentée en courant, produit un champ magnétique dans le passage 26. Le champ magnétique oriente les particules de fer contenues dans le fluide magnéto-rhéologique de manière que les particules de fer bloquent ou limitent la circulation d'huile synthétique.

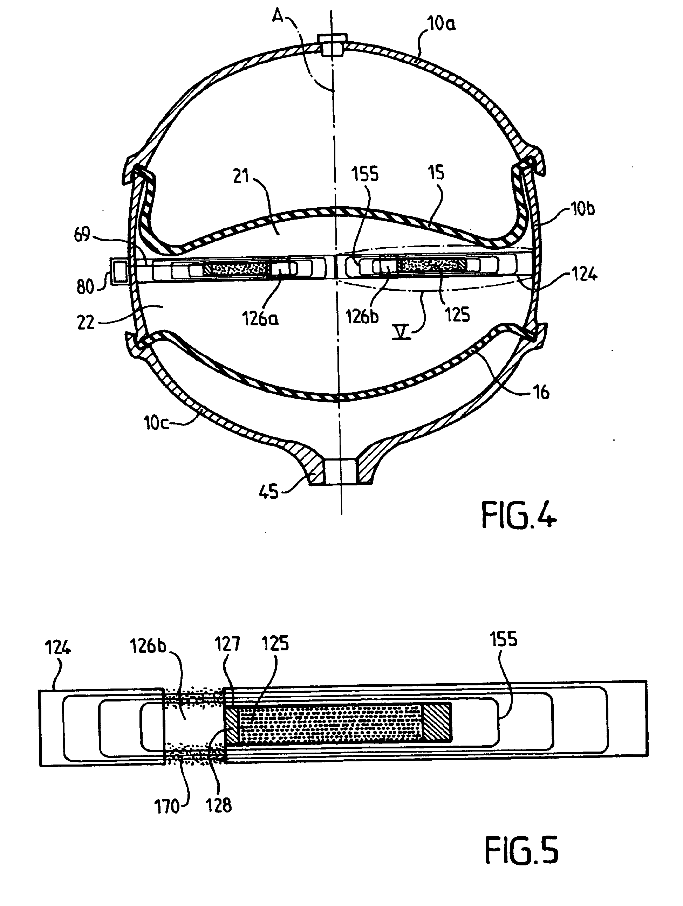

En se référant à la figure 4, on va maintenant décrire un deuxième mode de réalisation. Les éléments de la sphère de suspension 1 identiques au premier mode de réalisation sont désignés par le même chiffre de référence et ne sont pas décrits à nouveau. Ici, la paroi de séparation 124 comporte deux passages parallèles 126a et 126b qui traversent son épaisseur. La distance du passage 126a à l'axe A est sensiblement égale à la distance du passage 126b à l'axe A. La paroi de séparation 124 comporte un évidement annulaire 127 (figure 5) dans lequel la bobine 125 est insérée. La bobine est fixée dans l'évidement 127 par l'injection dans l'évidement 127 de résine ou colle 128 (figure 5). L'axe d'enroulement de la bobine 125 est perpendiculaire au plan de la paroi 124. La bobine 125 entoure les passages 126a et 126b, c'est-à-dire que le rayon de la bobine 125 est supérieur à la distance des passages 126a et 126b à l'axe A. La paroi de séparation 124 est réalisée par exemple dans un matériau ferromagnétique.

Sur la figure 5, on a représenté schématiquement, par des lignes de champ 155, le champ magnétique qui peut être produit à l'intérieur du passage 126b lorsque la bobine 125 est alimentée en courant. Le champ magnétique traverse transversalement le passage 126b. Lorsque la bobine 125 est alimentée en courant, des particules de fer 170 contenues dans le fluide magnéto-rhéologique s'orientent selon les lignes de champ 155 créant ainsi des barrières qui s'opposent ou tout au moins freinent fortement la circulation de l'huile entre les deux chambres 21 et 22. Par symétrie de la paroi 124, le champ magnétique créé dans le passage 126a est ici identique au champ magnétique créé dans le passage 126b.

On va maintenant décrire le fonctionnement de la sphère de suspension 1 selon le premier mode de réalisation. Le fonctionnement de la sphère de suspension 1 selon le deuxième mode de réalisation est identique. Les fluides utilisés dans les chambres 2, 21 et 22 sont sensiblement incompressibles. Ainsi, tout déplacement du piston 3 dans le cylindre 4 se traduit par un déplacement de liquide magnéto-rhéologique entre les chambres 21 et 22 à travers le passage 26 ou les passages 126a et 126b. Le principe de fonctionnement de la sphère de suspension 1 est de rendre ce déplacement de liquide magnéto-rhéologique plus ou moins facile en contrôlant la viscosité du liquide magnéto-rhéologique au niveau du passage 26 à l'aide d'un champ magnétique, ce qui modifie la force d'amortissement qui s'oppose au déplacement du piston 3 et des organes qui lui sont liés par la tige 5.

Lors d'un mouvement de compression, c'est-à-dire lorsque le piston 3 effectue un mouvement de translation dans le corps de cylindre 4 vers la sphère de suspension 1, de l'huile propre entre dans la chambre inférieure 23 et comprime la membrane 16. La membrane 16 se déforme de manière à augmenter le volume de la chambre inférieure 23 ce qui équivaut à diminuer le volume de la chambre 22. Le fluide magnéto-rhéologique est alors poussé à travers le canal 26 de la paroi 24 vers la chambre 21. Simultanément, on peut alimenter la bobine 25 de manière qu'elle génère un champ magnétique qui ajuste la force d'amortissement en changeant la structure de l'écoulement de fluide magnéto-rhéologique à l'intérieur du passage 26. Une certaine quantité du fluide magnéto-rhéologique passe de la chambre 22 à la chambre 21 par le passage 26, la quantité étant fonction du déplacement du piston 3. Le fluide magnéto-rhéologique qui se trouve dans la chambre 21 comprime la membrane 15. La membrane 15 se déforme de manière à augmenter le volume de la chambre 21 ce qui équivaut à diminuer le volume de la chambre 20. Le gaz contenu dans la chambre 20 est alors d'avantage comprimé entre la membrane 15 et la partie 10a. La figure 3 représente un état possible de la sphère de suspension 1 après un mouvement de compression en partant de l'état de la figure 1.

On va maintenant décrire un mouvement de rebond, c'est-à-dire lorsque le piston 3 effectue un mouvement de translation dans le corps de cylindre 4 dans la direction opposée à la sphère de suspension 1. De l'huile propre sort de la chambre inférieure 23 pour rentrer dans la chambre 2. La membrane 16 n'est plus comprimée par l'huile propre contenue dans la chambre 23. Simultanément, le gaz de la chambre 20 repousse la membrane 15 de manière à augmenter le volume de la chambre 20. La membrane 15 repousse le fluide magnéto-rhéologique à l'extérieur de la chambre 21 à travers le passage 26. Simultanément, on peut alimenter la bobine 25 de manière qu'elle génère un champ magnétique qui ajuste la force d'amortissement en changeant la structure du flux de fluide magnéto-rhéologique à l'intérieur du passage 26. Une certaine quantité du fluide magnéto-rhéologique, qui dépend du déplacement du piston 3, passe de la chambre 21 à la chambre 22. Le fluide contenu dans la chambre 22 repousse la membrane 16 qui se déforme souplement de manière à augmenter le volume de la chambre 22, et à diminuer le volume de la chambre 23 à mesure que le piston 3 se déplace.

D'autres variantes sont possibles, par exemple la paroi 24 ou 124 peut également comporter plusieurs bobines ainsi qu'un nombre différent de passages. En outre, la forme des passages n'est pas limitée aux exemples représentés. Le diamètre et le nombre des passages dépendent de l'amortissement nécessaire.

La paroi de séparation 24 ou 124 peut être réalisée de façon monobloc ou en plusieurs parties. L'évidement 127 peut être ouvert sur l'une des deux grandes faces de la paroi 124 afin de faciliter l'insertion de la bobine 125 dans la paroi 124. Une fois que la bobine 125 est insérée dans l'évidement 127, elle peut être fixée à la paroi 124 à l'aide de colle ou autre moyen. La paroi de séparation 24 ou 124 peut être constituée d'un ou de plusieurs matériaux, le ou les matériaux pouvant comporter, mais sans s'y limiter, du métal ou du plastique.

En outre, l'enveloppe peut être composée d'une ou de plusieurs pièces, les différentes pièces de l'enveloppe peuvent être assemblées par tout mode d'assemblage.

L'enveloppe peut être réalisée de toute forme. Une enveloppe sphérique présente une bonne résistance aux pressions importantes à l'intérieur de la sphère de suspension. De plus, comme tout déplacement du piston 3 dans le cylindre 4 se traduit par un déplacement du même volume de liquide magnéto-rhéologique entre les chambres 21 et 22, le volume total de la sphère de suspension est lié à la course du piston et au volume de liquide en mouvement. Une forme sphérique est un bon compromis d'encombrement pour un volume donné. On peut néanmoins réaliser une enveloppe d'une forme quelconque, par exemple cubique ou parallélépipédique ou bien d'une forme complexe en fonction des contraintes d'encombrement.

Le goulot 45 et le corps de cylindre 4 peuvent être fixés de diverses manières. En outre, une ou plusieurs pièces intermédiaires peuvent servir à relier la sphère de suspension 1 et le corps de cylindre 4.

De manière plus générale, la sphère de suspension 1 peut être utilisée dans tout système qui nécessite un amortissement. On peut par exemple utiliser une sphère de suspension 1 sur chaque bras de suspension d'un véhicule ainsi qu'une sphère de suspension 1 au centre de chaque essieu du véhicule.

Bien que l'invention ait été décrite en relation avec plusieurs modes de réalisations particuliers, il est bien évident qu'elle n'y est nullement limitée et qu'elle comprend tous les équivalents techniques des moyens décrits ainsi que leurs combinaisons si celles-ci entrent dans le cadre de l'invention revendiquée.

## Revendications

1. Sphère de suspension comportant une enveloppe (10) munie d'une ouverture (11) destinée à communiquer avec l'espace intérieur d'un corps de cylindre (4) contenant un piston (3), ladite enveloppe (10) comportant une première chambre (20) contenant un gaz et une membrane (15) déformable séparant de manière étanche ladite première chambre (20) d'une deuxième chambre (21), ladite deuxième chambre (21) contenant un fluide magnéto-rhéologique, ladite enveloppe (10) comportant une paroi de séparation (24) séparant ladite deuxième chambre (21) d'une troisième chambre (22) contenant du fluide magnéto-rhéologique, lesdites deuxième et troisième chambres (21 et 22) étant aptes à communiquer par au moins un passage (26), ladite sphère de suspension comportant au moins une bobine (25) agencée de manière à produire un champ magnétique dans ledit au moins un passage (26) lorsque ladite au moins une bobine (25) est alimentée en courant, **caractérisée en ce que** ladite enveloppe (10) comporte une quatrième chambre (23), la quatrième chambre (23) contenant une huile propre, la quatrième chambre (23) étant séparée de manière étanche de la troisième chambre (22) par une deuxième membrane (16) déformable, la quatrième chambre (23) communiquant avec l'espace intérieur dudit corps de cylindre (4) à travers ladite ouverture (11).

2. Sphère de suspension selon la revendication 1, **caractérisée en ce que** ladite enveloppe (10) comporte au moins deux parties (10a et 10b) assemblées l'une à l'autre, une rainure (17) annulaire étant prévue entre un bord d'une première (10a) desdites parties et un bord correspondant d'une deuxième (10b) desdites parties, ladite membrane (15) étant fixée par serrage dans ladite rainure (17).

3. Sphère de suspension selon la revendication 1, **caractérisée en ce que** ladite enveloppe (10) est constituée de trois parties (10a, 10b et 10c) assemblées, une rainure (17) annulaire étant prévue entre un bord d'une première partie d'extrémité (10a) de l'enveloppe et un bord correspondant d'une partie centrale (10b) de l'enveloppe, une deuxième rainure (18) annulaire étant prévue entre un bord opposé de ladite partie centrale (10b) et un bord correspondant d'une deuxième partie d'extrémité (10c) de l'enveloppe, lesdites première et deuxième membranes (15 et 16) étant fixées respectivement par serrage dans lesdites première et deuxième rainures (17 et 18).

4. Sphère de suspension selon l'une quelconque des revendications 1 à 3, **caractérisée en ce que** ladite paroi de séparation (24) est rigide, ledit au moins un passage (26) étant percé dans ladite paroi de séparation (24).

5. Sphère de suspension selon l'une quelconque des revendications 1 à 4, **caractérisée en ce que** ladite paroi de séparation (24) rigide porte ladite au moins une bobine (25).

6. Sphère de suspension selon l'une quelconque des revendications 1 à 5, **caractérisée en ce** le sens d'enroulement de ladite au moins une bobine (25) est tel que ledit champ magnétique traverse transversalement au moins une portion dudit au moins un passage (26).

7. Sphère de suspension selon l'une quelconque des revendications 1 à 6, **caractérisée en ce que** ladite au moins une bobine (25) est reliée à une unité de commande (56), apte à produire un courant contrôlé à travers ladite au moins une bobine (25).

8. Sphère de suspension selon l'une quelconque des revendications 1 à 7, **caractérisée en ce que** ladite paroi de séparation (24) est réalisée dans un matériau ferromagnétique.

9. Sphère de suspension selon l'une quelconque des revendications 1 à 8, **caractérisée en ce que** lesdites deuxième et troisième chambres (21, 22) sont aptes à communiquer par plusieurs passages (126a, 126b).

10. Sphère de suspension selon la revendication 9, **caractérisée en ce que** ladite au moins une bobine (125) entoure l'ensemble desdits plusieurs passages (126a, 126b).

## Claims

1. Suspension sphere comprising a shell (10) provided with an opening (11) designed to communicate with the internal space of a cylinder body (4) containing a piston (3), said shell (10) comprising a first chamber (20) containing a gas and a deformable membrane (15) separating said first chamber (20) in leakproof manner from a second chamber (21), said second chamber (21) containing a magnetorheological fluid, said shell (10) comprising a separating wall (24) separating said second chamber (21) from a third chamber (22) containing magnetorheological fluid, said second and third chambers (21 and 22) being capable of communicating by at least one passage (26), said suspension sphere comprising at least one coil (25) arranged in such a way as to produce a magnetic field in said at least one passage (26) when said at least one coil (25) is supplied with current, **characterized in that** said shell (10) comprises a fourth chamber (23), the fourth chamber (23) containing a clean oil, the fourth chamber (23) being separated in leakproof manner from the third chamber (22) by a second deformable membrane (16), the fourth chamber (23) communicating with the internal space of said cylinder body (4) via said opening (11).

2. Suspension sphere according to Claim 1, **characterized in that** said shell (10) comprises at least two parts (10a and 10b) assembled together, an annular groove (17) being provided between an edge of a first one (10a) of said parts and a corresponding edge of a second one (10b) of said parts, said membrane (15) being fixed by clamping in said groove (17).

3. Suspension sphere according to Claim 1, **characterized in that** said shell (10) consists of three assembled parts (10a, 10b and 10c), an annular groove (17) being provided between an edge of a first end part (10a) of the shell and a corresponding edge of a central part (10b) of the shell, a second annular groove (18) being provided between an opposing edge of said central part (10b) and a corresponding edge of a second end part (10c) of the shell, said first and second membranes (15 and 16) being fixed respectively by clamping in said first and second grooves (17 and 18).

4. Suspension sphere according to any one of Claims 1 to 3, **characterized in that** said separating wall (24) is rigid, said at least one passage (26) being drilled in said separating wall (24).

5. Suspension sphere according to any one of Claims 1 to 4, **characterized in that** said rigid separating wall (24) bears said at least one coil (25).

6. Suspension sphere according to any one of Claims 1 to 5, **characterized in that** the winding direction of said at least one coil (25) is such that said magnetic field passes transversely through at least one portion of said at least one passage (26).

7. Suspension sphere according to any one of Claims 1 to 6, **characterized in that** said at least one coil (25) is connected to a control unit (56) capable of producing a controlled current through said at least one coil (25).

8. Suspension sphere according to any one of Claims 1 to 7, **characterized in that** said separating wall (24) is made of a ferromagnetic material.

9. Suspension sphere according to any one of Claims 1 to 8, **characterized in that** said second and third chambers (21, 22) are capable of communicating via a plurality of passages (126a, 126b).

10. Suspension sphere according to Claim 9, **characterized in that** said at least one coil (125) surrounds all of said plurality of passages (126a, 126b).

## Patentansprüche

1. Federkugel mit einer Schale (10), die mit einer Öffnung (11) versehen ist, die zur Herstellung einer kommunizierenden Verbindung mit dem Innenraum eines einen Kolben (3) enthaltenden Zylinderkörpers (4) dient, wobei die Schale (10) eine erste Kammer (20) aufweist, die ein Gas und eine verformbare Membran (15) enthält, welche die erste Kammer (20) dicht von einer zweiten Kammer (21) trennt, wobei die zweite Kammer (21) ein magneto-rheologisches Fluid enthält, wobei die Schale (10) eine Trennwand (24) aufweist, welche die zweite Kammer (21) von einer dritten, magneto-rheologisches Fluid enthaltenden Kammer (22) trennt, wobei die zweite und dritte Kammer (21 und 22) über wenigstens einen Durchlass (26) kommunizieren können, wobei die Federkugel wenigstens eine Spule (25) aufweist, die so angeordnet ist, dass in dem wenigstens einen Durchlass (26) ein Magnetfeld erzeugt wird, wenn Strom durch die wenigstens eine Spule (25) fließt, **dadurch gekennzeichnet, dass** die Schale (10) eine vierte Kammer (23) aufweist, wobei die vierte Kammer (23) ein geeignetes Öl enthält, wobei die vierte Kammer (23) durch eine zweite verformbare Membran (16) dicht von der dritten Kammer (23) getrennt ist und wobei die vierte Kammer (23) durch die Öffnung (11) mit dem Innenraum des Zylinderkörpers (4) kommuniziert.

2. Federkugel gemäß Anspruch 1, **dadurch gekennzeichnet, dass** die Schale (10) wenigstens zwei aneinander montierte Bauteile (10a und 10b) aufweist, wobei eine Ringnut (17) zwischen einem Rand eines ersten (10a) der Bauteile und einem entsprechenden Rand eines zweiten (10b) der Bauteile vorgesehen ist, wobei die Membran (15) in der Nut (17) eingeklemmt ist.

3. Federkugel gemäß Anspruch 1, **dadurch gekennzeichnet, dass** die Schale (10) aus drei zusammengebauten Bauteilen (10a , 10b und 10c) besteht, wobei eine Ringnut zwischen einem Rand eines ersten Endbauteils (10a) der Schale und einem entsprechenden Rand eines zentralen Bauteils (10b) der Schale vorgesehen ist, wobei eine zweite Ringnut (18) zwischen einem entgegengesetzten Rand des zentralen Bauteils (10b) und einem entsprechenden Rand eines zweiten Endbauteils (10c) der Schale vorgesehen ist, wobei die erste und zweite Membran (15 und 16) in der ersten bzw. zweiten Nut (17 bzw. 18) festgeklemmt sind.

4. Federkugel gemäß einem der Ansprüche 1 bis 3, **dadurch gekennzeichnet, dass** die Trennwand (24) starr ist, wobei der wenigstens eine Durchlass (26) die Trennwand (24) durchbohrt.

5. Federkugel gemäß einem der Ansprüche 1 bis 4, **dadurch gekennzeichnet, dass** die starre Trennwand (24) wenigstens eine Spule (25) trägt.

6. Federkugel gemäß einem der Ansprüche 1 bis 5, **dadurch gekennzeichnet, dass** die Wicklungsrichtung der wenigstens einen Spule (25) so gewählt ist, dass das Magnetfeld quer durch wenigstens einen Abschnitt des wenigstens einen Durchlasses (26) verläuft.

7. Federkugel gemäß einem der Ansprüche 1 bis 6, **dadurch gekennzeichnet, dass** die wenigstens eine Spule (25) mit einer Steuereinheit (56) verbunden ist, die in der Lage ist, einen kontrollierten Strom durch die wenigstens eine Spule (25) zu erzeugen.

8. Federkugel gemäß einem der Ansprüche 1 bis 7, **dadurch gekennzeichnet, dass** die Trennwand (24) aus einem ferromagnetischen Material besteht.

9. Federkugel gemäß einem der Ansprüche 1 bis 8, **dadurch gekennzeichnet, dass** die zweite und dritte Kammer (21, 22) über mehrere Durchlässe (126a, 126b) miteinander kommunizieren können.

10. Federkugel gemäß Anspruch 9, **dadurch gekennzeichnet, dass** die wenigstens eine Spule (125) die Gesamtheit der mehreren Durchlässe (126a, 126b) umgibt.
